# EUROPÄISCHE PATENTSCHRIFT

(11) **EP 1 972 048 B1**
(45) Veröffentlichungstag und Bekanntmachung des Hinweises auf die Patenterteilung: **05.08.2015**
(21) Anmeldenummer: 06829837.1
(22) Anmeldetag: 22.12.2006
(51) Int. Cl.: H02K 5/10, H02K 7/116, H02K 11/00

(54) **VORRICHTUNG**
APPARATUS
DISPOSITIF

(30) Priorität: 03.01.2006 DE 102006000799
(43) Veröffentlichungstag der Anmeldung: 24.09.2008
(73) Patentinhaber: SEW-EURODRIVE GmbH & Co. KG, 76646 Bruchsal (DE)
(72) Erfinder: MAHLEIN, Jochen, 76139 Karlsruhe (DE); EGGER, Björn, 59929 Brilon (DE); DESCHNER, Stephan, 76684 Östringen (DE)
(86) Internationale Anmeldenummer: PCT/EP2006/012446
(87) Internationale Veröffentlichungsnummer: WO 2007/076976

(56) Entgegenhaltungen:
- DE-A1- 3 107 694
- DE-A1- 4 217 837
- DE-A1- 4 240 044
- DE-A1- 19 500 350
- DE-A1- 19 635 180
- DE-A1- 19 714 784
- DE-B3- 10 349 543
- DE-C1- 19 940 235
- DE-U- 1 885 108

## Beschreibung

Die Erfindung betrifft eine **Vorrichtung, umfassend einen ersten, einen zweiten und einen letzten Raumbereich.**

Aus der DE 197 14 784 A1 ist ein Kompaktantrieb bekannt, der einen Elektromotor umfasst, an dessen einer Stirnseite ein Getriebe und an dessen anderer Stirnseite ein Umrichter angeordnet ist. Dabei muss der Elektronikbereich beziehungsweise der Motorbereich gegen das Getriebe abgedichtet werden. Nachteilig ist dabei, dass eine große axiale Länge vorhanden ist und nur an einer Stirnseite des Kompaktantriebs ein Abtrieb zur Verfügung gestellt werden kann.

Aus der JP 2002336305 A ist ein Getriebemotor bekannt, der allerdings keinen Umrichter umfasst. Außerdem gibt es zwischen Getriebe, Motor und Bremse sowie den zugehörigen Gehäuseteilen Schnittstellen, welche präzise gefertigt werden müssen und somit aufwendig und kostspielig sind.

Aus der DE 196 22 396 A1 ist ein Umrichter bekannt, welcher axial an einem Elektromotor hinter dessen Lüfter montiert wird und somit von dessen Lüfterstrom gekühlt wird. Allerdings ist somit ein großer Bauraum notwendig und außerdem ein Lüfter, der Umgebungsluft vorbeileiten können muss.

Aus der EP 0 694 203 B1 ist eine piezoelektrische Bremse bekannt.

Aus der DE 102 07 760 ist ein Verstellgetriebe bekannt, das allerdings ein großes Bauvolumen und eine Schnittstelle zum Rotor des Motors hin benötigt.

Aus der DE 198 48 324 A1 ist eine Kupplung bekannt, die allerdings zusätzliche aufwendige und kostspielige Bearbeitungen der drehbar gelagerten Teile erfordert. Insbesondere ist nicht nur die Sonne und die Rotorwelle sondern auch eine Kupplungshülse umfasst. Höhere Anzahl von Teilen bedeuten aber auch höhere Lagerkosten.

Aus der EP 1 081 827 A1 ist ein Elektrowerkzeug bekannt, bei dem ein Getriebe von einem Elektromotor antreibbar ist, wobei allerdings eine aufwendig zu fertigende Schnittstelle zwischen den Gehäuseteilen des Motors und des Getriebes vorgesehen ist.

Aus der DE 43 09 559 ist ein achsversetztes Winkelgetriebe bekannt, also Spiroplangetriebe, welches mit einem Elektromotor verbindbar und von diesem antreibbar ist.

Aus der DE 199 01 841 C2 ist eine Anordnung bekannt, bei der unter Umständen Wasser und/oder Reinigungsmittel in den atmosphärischen Raum der Rollmembran eindringen kann, Nachteiligerweise können Korrosion der teile und Schäden an den Wellendichtringen die Folge sein, die zum Ausfall einer Komponente führen können.

**Aus der** DE 42 40 044 A1 **ist eine Druckausgleichanordnung für Elektromotoren mit geschlossenen Motorgehäusen bekannt.**

**Aus der** DE 195 00 350 A1 **ist ein Hydraulikelement mit einem semipermeablem Belüftungselement bekannt.**

**Aus der** DE 31 07 694 A1 **ist ein Gerätegehäuse zur Aufnahme wärmeabgebender elektrischer Geräte bekannt.**

**Aus der** DE 197 14 784 A1 **ist ein Kompaktantrieb bekannt.**

**Aus der** DE 18 85 108 U **ist eine Vorrichtung zum Druckausgleich bei geschlossenen Getriebegehäusen von Elektroflaschenzügen bekannt.**

**Aus der** DE 196 35 180 A1 **ist ein Gehäuse für eine Antriebsvorrichtung für einen Verstellantrieb für ein Schiebedach bekannt mit einer Öffnung, welche mit einer gasdurchlässigen flüssigkeitsundurchlässigen Membran abgedeckt ist, welche an ihrem Umfang schweißverbunden ist mit der Öffnungsberandung.**

**Aus der** DE 103 49 543 B3 **ist eine Vorrichtung mit Gehäuse bekannt.**

**Aus der** DE 42 17 837 A1 **ist ein hermetisches Gehäuse für elektronische Schaltungseinrichtungen bekannt.**

Der Erfindung liegt daher die Aufgabe zugrunde, eine Vorrichtung zum Einsatz für hygienische und andere Bereiche weiterzubilden.

Erfindungsgemäß wird die Aufgabe bei der Vorrichtung nach den in Anspruch 1 oder 2 angegebenen Merkmalen gelöst.

Wichtige Merkmale der Erfindung bei der Vorrichtung sind, dass zwischen einem ersten und einem zweiten Raumbereich eine erste Membran angeordnet zwischen einem letzten Raumbereich und der Umgebung der Vorrichtung eine letzte Membran angeordnet ist.

Von Vorteil ist dabei, dass die Erfindung besonders in hygienischen Bereichen, wie Lebensmittelproduktion oder dergleichen, einsetzbar ist. Denn es ist in besonders sicherem Maße das Austreten von Schmierstoff verhindert. Selbst wenn das Getriebe oder der Antrieb erhitzt wird, kann der Schmierstoff nicht austreten, da eine Membran sich in den Raumbereich der Elektronik ausdehnt. Dieser wiederum ist nochmals über eine Membran gegen die Umgebung abgesichert.

Das genannte Erhitzen ist beispielsweise dadurch bewirkt, dass die Arbeitstemperaturen veränderlich sind. Bei ausgeschaltetem Zustand sinkt die Arbeitstemperatur auf Umgebungstemperatur ab. Bei dauerhaft vorgesehener Nennlast steigt die Temperatur auf einen hohen Wert. Bei den zugehörigen Temperaturübergängen würde ohne Druckausgleich durch die Membranen ein hoher Überdruck beispielsweise im Getriebebereich entstehen.

Dies würde dazu führen können, dass Schmierstoff aus Lager und Dichtung austreten könnte, wenn ein gewisser kritischer Wert überschritten wäre. Durch den Druckausgleich wird diese Gefahr vermieden.

Mittels der ersten Membran wird jedoch das Volumen der Luft des Getriebebereichs in den Raumbereich der Elektronik hinein ausgedehnt. Der Überdruck wird mittels der zweiten Membran gegen die Umgebung hin abgebaut.

Selbst wenn die erste Membran leicht undicht werden würde, würde Schmierstoff nur in den Elektronikbereich eindringen und nicht sofort die zweite Membran verstopfen oder gar in die Umgebung eindringen.

Reinigungsmittel kann nicht durch die letzte Membran eindringen. Selbst wenn jedoch Spuren eindringen würden, wäre dies fern gehalten von der ersten Membran, weil die Spuren sich im Raumbereich verteilen. Somit ist die erste Membran geschützt und ebenso das Getriebeinnere. Wellendichtringe sind somit weniger beschädigbar.

Bei der Erfindung ist auch wichtig, dass die Vorrichtung insgesamt zwar eine Funktion ausführt, wobei allerdings innerhalb der Vorrichtung die Raumbereiche jeweils verschiedene Funktionsteile umfassen, wie beispielsweise mechanische oder elektromechanische oder elektronische Funktionsteile. Im mechanischen Teil sind beispielsweise Verzahnungsteile, Wellen und Schmierstoff vorgesehen, aber keine elektrischen Bauteile oder elektrische Spulen oder elektrische Drähte. Im elektromechanischen Bereich sind beispielsweise bestrombare Spulenwicklungen oder mit Strom beschickbare Leitungen vorgesehen, aber keine elektronischen Bauelemente. Im elektronischen Bereich sind beispielsweise Widerstände, Kondensatoren, Halbleiterschalter und/oder integrierte Halbleiter-Chip-Bauelemente vorgesehen. Sensoren sollen dabei außer Betracht bleiben.

**Erfindungsgemäß** ist die erste Membran undurchlässig für Gase und Flüssigkeiten, insbesondere für Schmierstoffe und Luft sowie Wasser. Von Vorteil ist dabei, dass die letzte Membran geschützt ist vor dem Schmierstoff.

**Erfindungsgemäß** ist die letzte Membran durchlässig für Gase, wie Luft. Von Vorteil ist dabei, dass ein Luftdruckausgleich einfach und schnell herstellbar ist.

**Von Vorteil ist, dass Erwärmungen der Raumbereiche von Getriebe oder Elektromotor** und dadurch bewirkte Luftdruckerhöhungen nicht direkt an die Umgebung sondern über den Elektronik-Raumbereich abgebbar ist.

**Erfingdungsgemäß** ist der letzte Raumbereich einer elektronischen Schaltung zugeordnet. Von Vorteil ist dabei, dass diese in einem Deckel als Gehäuseteil vorsehbar ist.

**Erfindungsgemäß** ist die elektronische Schaltung an einem zweiten Gehäuseteil vorgesehen, welches dicht verbindbar ist mit dem ersten Gehäuseteil. Von Vorteil ist dabei, dass das zweite Gehäuseteil schnell und einfach austauschbar ist. Somit ist bei Reparatur oder Wartung der Elektronikteil schnell und einfach austauschbar. Die elektrische Kontaktierung kann dabei mittels Steckverbindern schnell und einfach erfolgen beim Verbinden der Gehäuseteile.

Bei einer vorteilhaften Ausgestaltung ist die letzte Membran semipermeabel. Von Vorteil ist dabei, dass die Membran nicht verstopft werden kann durch Schmierstoff oder dergleichen. Sie ist nur für den Luft- oder Gasdruckausgleich vorgesehen.

Bei einer vorteilhaften Ausgestaltung ist die letzte Membran undurchlässig für Wasser und/oder Schmierstoff, wie Schmieröl oder Schmierfett. Von Vorteil ist dabei, dass kein Schmierstoff an die Umgebung austreten kann.

Bei einer vorteilhaften Ausgestaltung umfasst das Getriebe Schmierstoff. Von Vorteil ist dabei, dass Schmierstoff verwendbar ist, obwohl die Vorrichtung in hygienischer Umgebung, wie Lebensmittelproduktion einsetzbar ist.

Bei einer vorteilhaften Ausgestaltung ist die erste Membran aus einem elastischen Kunststoff gefertigt. Von Vorteil ist dabei, dass sie einfach und kostengünstig herstellbar ist.

Bei einer vorteilhaften Ausgestaltung ist die Vorrichtung ein Antrieb, umfassend zumindest ein Getriebe, einen dieses antreibenden Elektromotor und eine diesen versorgende elektronische Schaltung, wie Frequenzumrichter oder dergleichen. Von Vorteil ist dabei, dass ein Kompaktantrieb in hygienischer Umgebung installierbar ist, auch wenn er ein Getriebe mit Schmierstoff umfasst.

Bei einer vorteilhaften Ausgestaltung nimmt dasjenige erste Gehäuseteil, in welchem die erste Membran vorgesehen, zumindest ein Lager einer Welle des Getriebes auf und zumindest ein Lager der Rotorwelle des Elektromotors. Von Vorteil ist dabei, dass ein sehr kompakter Antrieb herstellbar ist. Denn das Gehäuseteil nimmt nicht nur die Lager auf sondern auch die erste Membran. Dabei ist es auch vorsehbar, dass die erste Membran nicht direkt in einer Ausnehmung des Gehäuseteils vorgesehen ist sondern in einer Komponente, wie Schraube oder dergleichen, welche in der Ausnehmung verbindbar ist.

Bei einer vorteilhaften Ausgestaltung ist die erste Membran mit einem Kunststoffspritzgussteil stoffschlüssig verbunden, insbesondere vergossen, verschweißt und/oder verklebt. Von Vorteil ist dabei, dass eine dichte Verbindung in einfacher Weise herstellbar ist.

Bei einer vorteilhaften Ausgestaltung weist das Kunststoffspritzgussteil einen Ansatz, insbesondere länglichen oder rohrförmigen Ansatz, auf, der in einer Ausnehmung eines ersten Gehäuseteils vorgesehen ist, insbesondere eines den Getriebebereich und den Motorbereich trennenden Gehäuseteils. Von Vorteil ist dabei, dass die auszutauschende Luft durch die Ausnehmung hindurchleitbar ist, wobei eine Abdichtung zum Schmierstoffbereich vorgesehen ist.

Bei einer vorteilhaften Ausgestaltung weist der Ansatz ein Gewinde auf, an dem ein Schraubteil, insbesondere Mutter, Schraube oder dergleichen, aufschraubbar ist zum Verbinden des Kunststoffspritzgussteils mit dem ersten Gehäuseteil. Von Vorteil ist dabei, dass das Kunststoffspritzgussteil dicht und lösbar verbindbar ist mit dem ersten Gehäuseteil in einfacher Weise. Somit ist nur eine kleine Ausnehmung im ersten Gehäuseteil notwendig und die Stabilität erhöht. Insbesondere ist hierzu zwischen Schraubteil und/oder Kunststoffspritzgussteil und Gehäuseteil eine Dichtelement, insbesondere O-Ring. vorgesehen, insbesondere zum Erreichen eines dichten Verbindens des Kunststoffspritzgussteils mit dem ersten Gehäuseteil.

Bei einer vorteilhaften Ausgestaltung umschließt die erste Membran für sich oder die erste Membran mit dem Kunststoffspritzgussteil mit Ausnahme einer oder mehrerer Ausnehmungen ein blasenförmiges Volumen. Von Vorteil ist dabei, dass eine kleine Ausnehmung im ersten Gehäuseteil ausreicht und trotzdem eine große Volumenänderung durch die Membran bewirkbar ist.

**Die Vorrichtung ist als Antrieb** ausgestaltbar, umfassend einen Elektromotor, einen diesen versorgenden Umrichter und ein vom Elektromotor angetriebenen Getriebe, wobei ein Gehäuseteil vorgesehen ist, das zumindest ein Lager für die Motorwelle aufnimmt und zumindest ein Lager für die Abtriebswelle des Getriebes,
wobei in dem Gehäuseteil eine Ausnehmung vorgesehen ist, welche den Getriebebereich und den Motorbereich verbindet, insbesondere deren Innenvolumina,
wobei in der Ausnehmung ein Mittel zum Druckluftausgleich vorgesehen ist.

Von Vorteil ist dabei, dass ein zentrales wesentliches Gehäuseteil verwendet ist, in dem die Lagerstellen in einer Aufspannung bearbeitbar sind und das eine hohe Stabilität bietet, da nur eine kleine Ausnehmung eingebracht werden muss.

Bei einer vorteilhaften Ausgestaltung umfasst das Mittel zum Druckluftausgleich eine erste Membran. Von Vorteil ist dabei, dass die Membran schmiermittelfest und elastisch auslegbar ist. Somit sind Luftdruckunterschiede kompensierbar durch Volumenänderung.

Bei einer vorteilhaften Ausgestaltung umfasst das Mittel zum Druckluftausgleich ein weiteres Teil, an dem die erste Membran verbunden ist. Von Vorteil ist dabei, dass die Befestigung der Membran in einfacher und dichter Weise an dem Teil vornehmbar ist, welches aus einem anderen Werkstoff, beispielsweise Kunststoff, als dem Werkstoff des Gehäuseteils, beispielsweise Stahlguss, ausführbar ist.

Bei einer vorteilhaften Ausgestaltung ist das Mittel zum Druckluftausgleich durch die Ausnehmung hindurch ragend ausgeformt zur Durchleitung von Luft durch die Ausnehmung zum Druckausgleich zwischen dem Motorbereich und Getriebebereich. Von Vorteil ist dabei, dass die Dichtheit einfach erreichbar ist.

Weitere Vorteile ergeben sich aus den Unteransprüchen.

Die Erfindung wird nun anhand von Abbildungen näher erläutert:

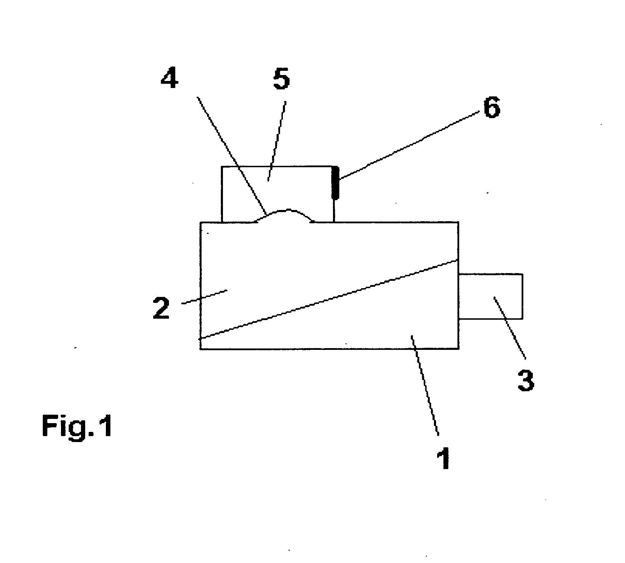

In der Figur 1 ist eine erfindungsgemäße Vorrichtung symbolisiert. Beispielhaft ist sie dabei als Antrieb ausgeführt, der einen Getriebebereich 1, einen Motorbereich 2 und einen Elektronikbereich 5 umfasst.

Die Abtriebswelle 3 ist ebenso gezeigt.

Bei Erwärmung des Motorbereichs dehnt sich das dortige Luftvolumen aus und somit dehnt sich auch die Membran 4 aus in den Elektronikbereich 5 hinein. Die Membran 4 ist im Gehäuse derart angeordnet, dass sie sich in den freien Luftraum des Elektronikbereichs 5 hinein ausdehnen kann.

Im Gehäuseteil um den Elektronikbereich herum ist eine semipermeable Membran 6 angeordnet, die bei Luftüberdruck das Entweichen von Luft an die Umgebung und bei Unterdruck das Eintreten von Luft von der Umgebung her ermöglicht.

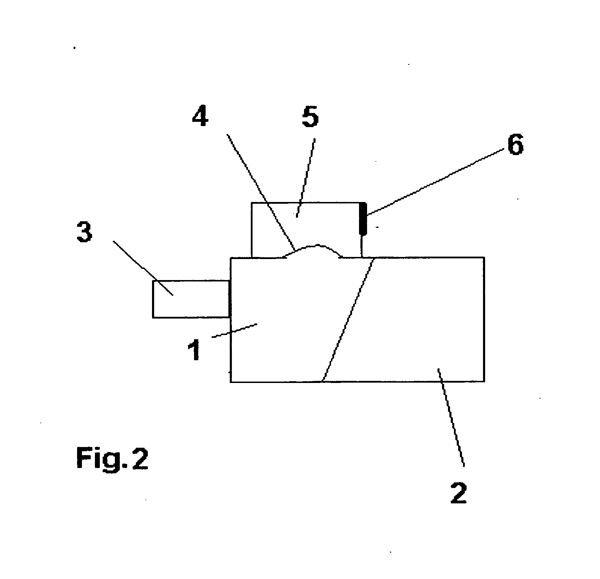

In Figur 2 ist ein anderes erfindungsgemäßes Ausführungsbeispiel gezeigt, bei dem die Ausdehnung der Membran statt vom Motorbereich her vom Getriebebereich her erfolgt. Wird also das Getriebe warm, dehnt sich dessen Innenvolumen, umfassend Schmierstoff und Luft aus. Jedoch können die Schmierstoffpartikel die semipermeable Membran 6 nicht verschmutzen. Denn die Ausdehnung wird nur von der Membran 4 quasi weitergegeben an den Luftraum im Elektronikbereich.

Der dann dort entstehende Überdruck wird über die semipermeable Membran 6 abgebaut, wie oben beschrieben.

Die Membran 6 ist in beiden Fällen derart gewählt, dass sie undurchlässig ist, insbesondere für Schmierstoff und vorzugsweise auch gegen Wasser und/oder Reinigungsmittel.

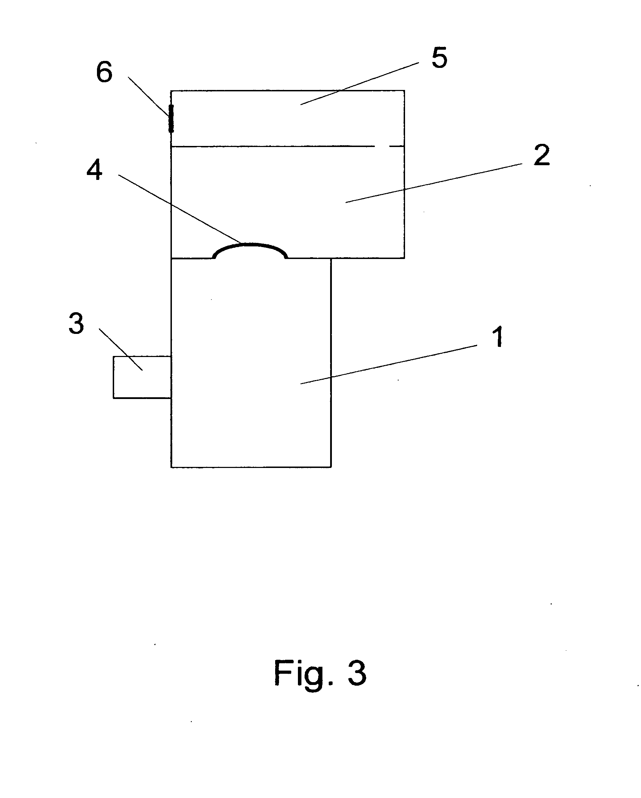

In der Figur 3 ist ein weiteres erfindungsgemäßes Ausführungsbeispiel gezeigt. Dabei ist die Membran 4 zwischen dem Getriebebereich und dem Motorbereich angeordnet. Bei Erwärmung des Getriebes dehnt sich die Membran in den Motorbereich hinein aus. Zwischen Elektronikbereich 5 und Motorbereich 2 besteht die Öffnung 7, durch die ein Druckausgleich der in den beiden Bereichen 2 und 5 befindlichen Innenluft ausführbar ist.

Die Membran ist dabei derart ausgebildet und gewählt, dass kein Schmierstoff des Getriebes diese durchdringen kann. Außerdem ist die Membran derart ausgewählt, dass keine chemische Reaktion mit dem Schmierstoff ihre Funktion beeinträchtigt. Im Motorbereich ist ein entsprechendes Volumen vorgesehen, in welches sich die Membran hinein ausdehnen darf.

Bei weiteren erfindungsgemäßen Ausführungsbeispielen wird das vorgesehen Volumen zumindest teilweise mit Begrenzungsmitteln versehen. Dazu ist beispielsweise ein Gehäuseteil derart in den Motorbereich hinein ausgeformt, dass die Membran bei Ausdehnung an diesem Gehäuseteil zumindest teilweise anliegt.

Bei weiteren erfindungsgemäßen Ausführungsbeispielen wird die Öffnung 7 durch eine semipermeable Membran oder ein Stoffvlies oder ein anderes Filter ersetzt, so dass Metallabriebe, Schmierstoffreste oder andere Schmutzpartikel vom Motorbereich nicht in den Elektronikbereich eindringen können.

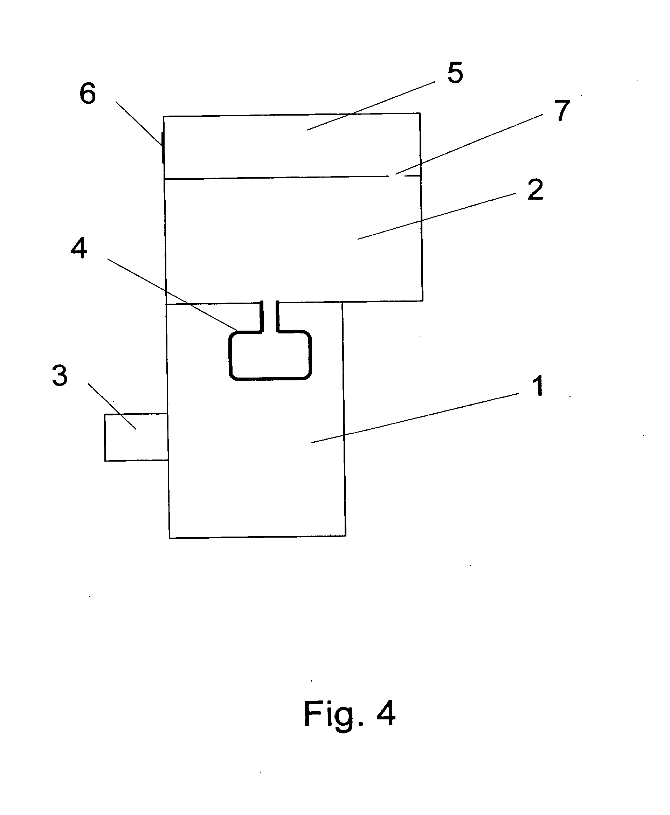

In der Figur 4 ist ein weiteres erfindungsgemäßes Ausführungsbeispiel gezeigt, bei dem im Unterschied zur Figur 3 die Membran 4 in den Getriebebereich hinein angeordnet ist und sich in ihn ausdehnen kann, wenn der Luftdruck der Innenluft im Getriebebereich kleiner ist als der Luftdruck im Motorbereich. Insbesondere ist die Membran 4 hierbei derart ausgeformt, dass sie blasenförmig ausgebildet ist, wenn kein Luftdruckunterschied zwischen Motorbereich 2 und Getriebebereich 1 vorhanden ist.

Wenn ein Luftdruckunterschied entsteht, wird die Blase entsprechend zusammengedrückt oder vergrößert, also sozusagen aufgeblasen.

Die blasenförmige Membran 4 ist in einer Ausnehmung des den Getriebebereich 1 und den Motorbereich 2 trennenden Gehäuseteils vorgesehen.

Bei weiteren erfindungsgemäßen Ausführungsbeispielen ist diese Ausnehmung ein Bohrloch.

Bei weiteren erfindungsgemäßen Ausführungsbeispielen ist im Getriebebereich 1 ein schalenförmiges Kunststoffspritzgussteil vorgesehen, an dem ein rohrförmiger Ansatz mit Außengewinde ausgebildet ist. Der rohrförmige Ansatz ist derart ausgebildet, dass er durch diese Ausnehmung, insbesondere das Bohrloch hindurchführbar ist und in den Motorbereich hinein ragt. Somit ist dann eine Mutter mit Innengewinde aufschraubbar auf das Außengewinde des rohrförmigen Ansatzes, wobei auf diese Weise das Kunststoffspritzgussteil lösbar verbindbar ist mit dem den Getriebebereich 1 und den Motorbereich 2 trennenden Gehäuseteil. Zur Abdichtung ist ein Dichtring, insbesondere O-Ring motorseitig oder getriebeseitig derart vorsehbar, dass er beim Festschrauben der Mutter eine Dichtung bildet gegen das Eindringen von Schmierstoff aus dem Getriebebereich in den Motorbereich. Die Membran ist beispielhaft aus elastischem Stoff, insbesondere Gummi, fertigbar und mit dem Kunststoffspritzgussteil vergossen, verschweißt und/oder verklebt. Somit bietet das Kunststoffspritzgussteil einerseits eine Begrenzung und andererseits einen Schutz für die Membran.

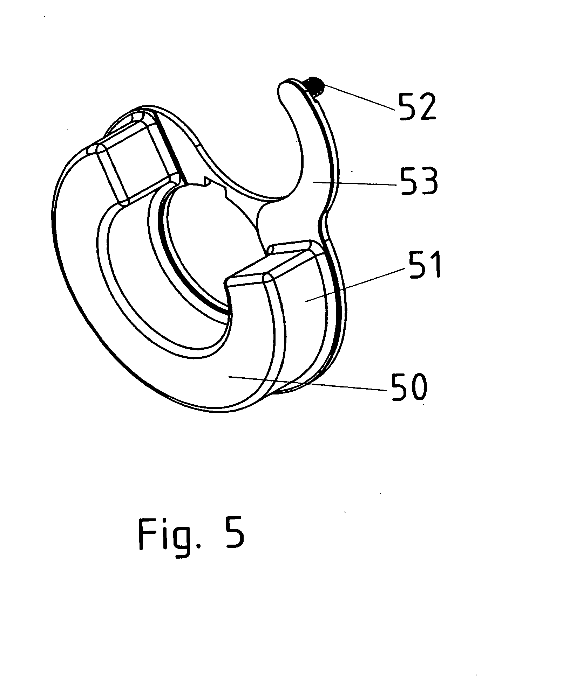

Figur 5 zeigt ein Beispiel für das Kunststoffspritzgussteil 51, auf welchem die Membran 50 verschweißt ist und das einen rohrförmiger Ansatz 52 mit Außengewinde am Ende des armförmigen Bereichs 53 aufweist.

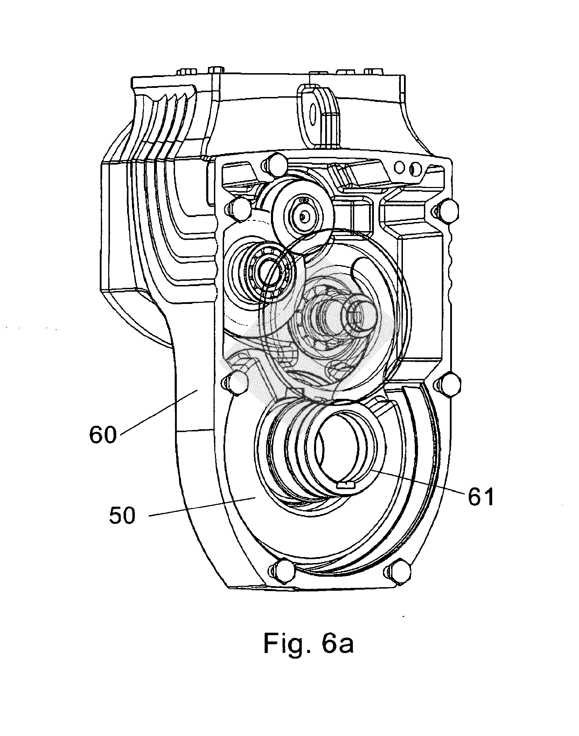

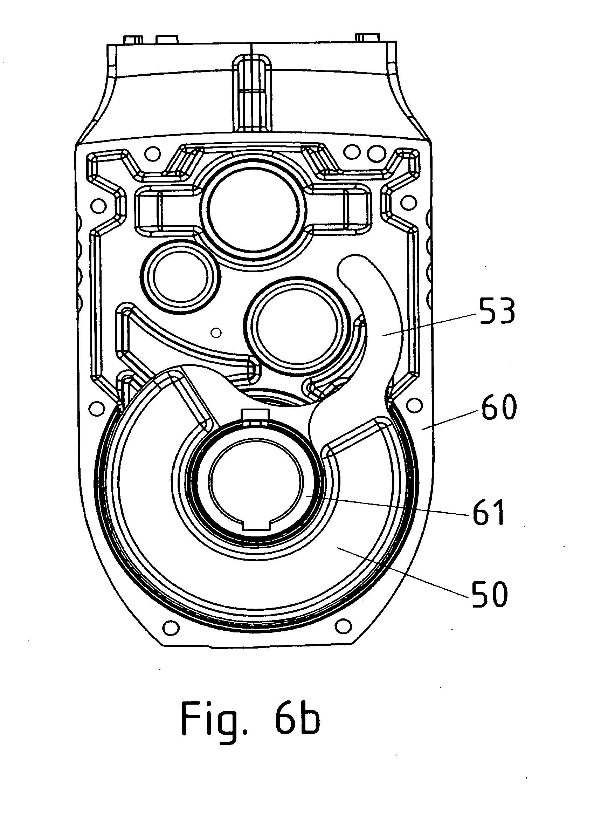

**Figur 6a** **und** **Figur 6b** **zeigen** den Getriebe-Umrichtermotor, welcher im Getriebebereich in einer Vertiefung des zentralen Gehäuseteits 60 das Kunststoffspritzgusstell 51 mit seiner armförmigen Bereich 53 umfasst. Dabei ist das von der Membran und dem Kunststoffspritzgussteil 51 umschlossene Volumen im Wesentlichen blasenförmig und umschließt die Abtriebswelle 61 in Umfangrichtung zumindest teilweise. Von Achsrichtung der Abtriebswelle aus gesehen ist die Blase C-förmig ausgeführt. Der rohrförmige Ansatz mit Außengewinde ist durch ein Bohrloch des zentralen Gehäuseteils 60, welches ein Lager der Abtriebswelle und ein Lager der Motorwelle aufnimmt, also Lagersitze hierzu aufweist, geführt, wodurch somit die von der Membran 50 und dem Kunststoffspritzgussteil 51 umschlossene Luft hindurchleitbar ist in den Bereich den Elektromotors, der mit dem Bereich der den Elektromotor versorgenden Elektronik verbunden ist. Dieser Bereich ist von zumindest einem Gehäuseteil begrenzt, in welchem eine Ausnehmung vorgesehen ist, in der ein Verschlussstopfen eingeschraubt und dicht verbunden ist, in welchem die erfindungsgemäße semipermeable letzte Membran vorgesehen ist.

### Bezugszeichenliste

- 1: Getriebebereich
- 2: Motorbereich
- 3: Abtriebswelle
- 4: Membran
- 5: Elektronikbereich
- 6: semipermeable Membran
- 50: Membran
- 51: Kunststoffspritzgussteil
- 52: rohrförmiger Ansatz mit Außengewinde
- 53: armförmiger Bereich
- 60: zentrales Gehäuseteil
- 61: Abtriebswelle

## Patentansprüche

1. Vorrichtung, umfassend einen ersten, einen zweiten und einen letzten Raumbereich,
**wobei der erste Raumbereich von einem Getriebe (1) und der zweite Raumbereich von einem Elektromotor (2) umfasst ist**
**dadurch gekennzeichnet, dass**
**der letzte Raumbereich einer elektronischen Schaltung (5) zugeordnet ist, die in einem zweiten Gehäuseteil vorgesehen ist, welches dicht verbindbar mit einem ersten Gehäuseteil (60) für das Getriebe oder den Elektromotor ist,**
**wobei zwischen dem ersten und dem zweiten Raumbereich eine erste Membran (4, 50) angeordnet ist, die im Wesentlichen undurchlässig für Gase und Flüssigkeiten ist und**
**wobei zwischen dem zweiten Gehäuseteil und der Umgebung der Vorrichtung eine letzte Membran (6) angeordnet ist, welche durchlässig ist für Gase.**

2. Vorrichtung, umfassend einen ersten, einen zweiten und einen letzten Raumbereich,
**wobei der erste Raumbereich von einem Getriebe (1) und der zweite Raumbereich von einem Elektromotor (2) umfasst ist**
**dadurch gekennzeichnet, dass**
**der letzte Raumbereich einer elektronischen Schaltung (5) zugeordnet ist, die in einem zweiten Gehäuseteil vorgesehen ist, welches dicht verbindbar mit einem ersten Gehäuseteil (60) für das Getriebe oder den Elektromotor ist,**
**wobei zwischen dem ersten und dem zweiten Gehäuseteil eine erste Membran (4, 50) angeordnet ist, die im Wesentlichen undurchlässig für Gase und Flüssigkeiten ist und**
**wobei zwischen dem zweiten Gehäuseteil und der Umgebung der Vorrichtung eine letzte Membran (6) angeordnet ist, welche durchlässig ist für Gase.**

3. Vorrichtung nach Anspruch 1 oder 2,
**dadurch gekennzeichnet, dass**
die Raumbereiche Teile umfassen, die zu verschiedenen Funktionstellen der Vorrichtung gehören, insbesondere mechanische oder elektromechanische oder elektronische Funktionsteile.

4. Vorrichtung nach mindestens einem der vorangegangenen Ansprüche,
**dadurch gekennzeichnet, dass**
**die erste Membran (4, 50) mit einem Kunststoffspritzgussteil (51) stoffschlüssig verbunden ist, insbesondere vergossen, verschweißt und/oder verklebt ist.**

5. Vorrichtung nach mindestens einem der vorangegangenen Ansprüche,
**dadurch gekennzeichnet, dass**
**dasjenige erste Gehäuseteil (60), in welchem die erste Membran (4, 50) vorgesehen ist, zumindest ein Lager einer Welle eines Getriebes aufnimmt und zumindest ein Lager der Rotorwelle eines Elektromotors.**

6. Vorrichtung nach mindestens einem der vorangegangenen Ansprüche,
**dadurch gekennzeichnet, dass**
**die erste Membran (4, 50) für sich oder die erste Membran (4, 50) mit dem Kunststoffspritzgussteil (51) mit Ausnahme einer oder mehrerer Ausnehmungen ein blasenförmiges Volumen umschließt.**

7. Vorrichtung nach mindestens einem der vorangegangenen Ansprüche,
**dadurch gekennzeichnet, dass**
**die erste Membran (4, 50) im Wesentlichen undurchlässig ist für Schmierstoffe, Luft sowie Wasser.**

8. Vorrichtung nach mindestens einem der vorangegangenen Ansprüche,
**dadurch gekennzeichnet, dass**
**die letzte Membran (6) semipermeabel und insbesondere durchlässig für Luft ist.**

9. Vorrichtung nach mindestens einem der vorangegangenen Ansprüche,
**dadurch gekennzeichnet, dass**
**die letzte Membran (6) undurchlässig ist für flüssiges Wasser und/oder Schmierstoff, wie Schmieröl oder Schmierfett, und insbesondere dass die letzte Membran (6) undurchlässig für Wasserdampf ist.**

10. Vorrichtung nach mindestens einem der vorangegangenen Ansprüche,
**dadurch gekennzeichnet, dass**
das Getriebe Schmierstoff umfasst.

11. Vorrichtung nach mindestens einem der vorangegangenen Ansprüche,
**dadurch gekennzeichnet, dass**
die erste Membran (4, 50) aus einem elastischen Kunststoff, insbesondere aus Gummi, Polyethylen oder ähnlichen Werkstoffen, gefertigt ist.

12. Vorrichtung nach mindestens einem der vorangegangenen Ansprüche,
**dadurch gekennzeichnet, dass**
die Vorrichtung ein Antrieb ist, umfassend zumindest ein Getriebe, einen dieses antreibenden Elektromotor und eine diesen versorgende elektronische Schaltung, wie Frequenzumrichter oder dergleichen.

13. Vorrichtung nach einem der Ansprüche 4 bis 12,
**dadurch gekennzeichnet, dass**
das Kunststoffspritzgussteil (51) einen Ansatz (52), insbesondere länglichen oder rohrförmigen Ansatz (52), aufweist, der in einer Ausnehmung eines ersten Gehäuseteils (60) vorgesehen ist, insbesondere eines den Getriebebereich (1) und den Motorbereich (2) trennenden Gehäuseteils (60),
insbesondere wobei der Ansatz (52) ein Gewinde aufweist, an dem ein Schraubteil, insbesondere Mutter, Schraube oder dergleichen, aufschraubbar ist zum Verbinden des Kunststoffspritzgussteils (51) mit dem ersten Gehäuseteil (60),
insbesondere wobei zwischen Schraubteil und/oder Kunststoffspritzgussteil (51) und Gehäuseteil (60) eine Dichtelement, insbesondere O-Ring, vorgesehen ist, insbesondere zum Erreichen eines dichten Verbindens des Kunststoffspritzgussteils (51) mit dem ersten Gehäuseteil (60).

## Claims

1. Apparatus, comprising a first, a second and a last spatial region,
wherein the first spatial region is comprised by a gearing (1) and the second spatial region is comprised by an electric motor (2)
**characterised in that**
the last spatial region is assigned to an electronic circuit (5) which is provided in a second housing part which is connectable in a sealed manner to a first housing part (60) for the gearing or the electric motor,
wherein, between the first and the second spatial region, there is arranged a first membrane (4, 50) which is substantially impermeable to gases and liquids and
wherein, between the second housing part and the surroundings of the apparatus, there is arranged a last membrane (6) which is permeable to gases.

2. Apparatus, comprising a first, a second and a last spatial region,
wherein the first spatial region is comprised by a gearing (1) and the second spatial region is comprised by an electric motor (2)
**characterised in that**
the last spatial region is assigned to an electronic circuit (5) which is provided in a second housing part which is connectable in a sealed manner to a first housing part (60) for the gearing or the electric motor,
wherein, between the first and the second housing part, there is arranged a first membrane (4, 50) which is substantially impermeable to gases and liquids and
wherein, between the second housing part and the surroundings of the apparatus, there is arranged a last membrane (6) which is permeable to gases.

3. Apparatus according to Claim 1 or 2,
**characterised in that**
the spatial regions comprise parts which belong to different functional parts of the apparatus, in particular mechanical or electromechanical or electronic functional parts.

4. Apparatus according to at least one of the preceding claims,
**characterised in that**
the first membrane (4, 50) is materially joined, in particular cast, welded and/or adhesively bonded, to a plastic injection-moulded part (51).

5. Apparatus according to at least one of the preceding claims,
**characterised in that**
the first housing part (60), in which the first membrane (4, 50) is provided, receives at least one bearing of a shaft of a gearing and at least one bearing of the rotor shaft of an electric motor.

6. Apparatus according to at least one of the preceding claims,
**characterised in that**
the first membrane (4, 50) by itself or the first membrane (4, 50) with the plastic injection-moulded part (51) encloses a bubble-shaped volume, with the exception of one or more recesses.

7. Apparatus according to at least one of the preceding claims,
**characterised in that**
the first membrane (4, 50) is substantially impermeable to lubricants, air as well as water.

8. Apparatus according to at least one of the preceding claims,
**characterised in that**
the last membrane (6) is semipermeable and in particular permeable to air.

9. Apparatus according to at least one of the preceding claims,
**characterised in that**
the last membrane (6) is impermeable to liquid water and/or lubricant, such as lubricating oil or lubricating grease, and in particular **in that** the last membrane (6) is impermeable to water vapour.

10. Apparatus according to at least one of the preceding claims,
**characterised in that**
the gearing comprises lubricant.

11. Apparatus according to at least one of the preceding claims,
**characterised in that**
the first membrane (4, 50) is produced from an elastic synthetic material, in particular from rubber, polyethylene or similar materials.

12. Apparatus according to at least one of the preceding claims,
**characterised in that**
the apparatus is a drive, comprising at least one gearing, an electric motor driving this gearing, and an electronic circuit, such as a frequency converter or the like, supplying this electric motor.

13. Apparatus according to one of Claims 4 to 12,
**characterised in that**
the plastic injection-moulded part (51) has a projection (52), in particular an elongated or tubular projection (52), which is provided in a recess of a first housing part (60), in particular of a housing part (60) separating the gearing region (1) and the motor region (2),
in particular wherein the projection (52) has a thread, on which a screw part, in particular nut, screw or the like, can be screwed to connect the plastic injection-moulded part (51) to the first housing part (60),
in particular wherein, between the screw part and/or the plastic injection-moulded part (51) and the housing part (60), there is provided a sealing element, in particular an O-ring, in particular for achieving a sealed connection of the plastic injection-moulded part (51) to the first housing part (60).

## Revendications

1. Dispositif, comprenant une première, une deuxième et une dernière région spatiale,
sachant que la première région spatiale est occupée par un mécanisme de transmission (1) et la deuxième région spatiale par un moteur électrique (2),
**caractérisé en ce qu'**un montage électronique (5) est affecté à la dernière région spatiale, montage qui est prévu dans une deuxième partie de boîtier qui peut être assemblée en étanchéité à une première partie de boîtier (60) pour le mécanisme de transmission ou le moteur électrique,
sachant qu'une première membrane (4, 50), qui est pour l'essentiel imperméable aux gaz et aux liquides, est disposée entre la première et la deuxième région spatiale,
et sachant qu'une dernière membrane (6), qui est perméable aux gaz, est disposée entre la deuxième partie de boîtier et l'environnement du dispositif.

2. Dispositif, comprenant une première, une deuxième et une dernière région spatiale,
sachant que la première région spatiale est occupée par un mécanisme de transmission (1) et la deuxième région spatiale par un moteur électrique (2),
**caractérisé en ce qu'**un montage électronique (5) est affecté à la dernière région spatiale, montage qui est prévu dans une deuxième partie de boîtier qui peut être assemblée en étanchéité à une première partie de boîtier (60) pour le mécanisme de transmission ou le moteur électrique,
sachant qu'une première membrane (4, 50), qui est pour l'essentiel imperméable aux gaz et aux liquides, est disposée entre la première et la deuxième partie de boîtier,
et sachant qu'une dernière membrane (6), qui est perméable aux gaz, est disposée entre la deuxième partie de boîtier et l'environnement du dispositif.

3. Dispositif selon la revendication 1 ou 2, **caractérisé en ce que** les régions spatiales comprennent des parties qui correspondent à différents éléments fonctionnels du dispositif, en particulier à des éléments fonctionnels mécaniques ou électromécaniques ou électroniques.

4. Dispositif selon au moins une des revendications précédentes, **caractérisé en ce que** la première membrane (4, 50) est assemblée par liaison de matière, en particulier par scellage, soudage et/ou collage, à une pièce (51) en matière plastique moulée par injection.

5. Dispositif selon au moins une des revendications précédentes, **caractérisé en ce que** la première partie de boîtier (60) dans laquelle est prévue la première membrane (4, 50) loge au moins un palier d'un arbre d'un mécanisme de transmission et au moins un palier de l'arbre de rotor d'un moteur électrique.

6. Dispositif selon au moins une des revendications précédentes, **caractérisé en ce que** la première membrane (4, 50) à elle seule, ou la première membrane (4, 50) avec la pièce (51) en matière plastique moulée par injection, à l'exception d'un ou plusieurs évidements, entoure un volume en forme de bulle.

7. Dispositif selon au moins une des revendications précédentes, **caractérisé en ce que** la première membrane (4, 50) est pour l'essentiel imperméable aux lubrifiants, à l'air et à l'eau.

8. Dispositif selon au moins une des revendications précédentes, **caractérisé en ce que** la dernière membrane (6) est semi-perméable, et en particulier est perméable à l'air.

9. Dispositif selon au moins une des revendications précédentes, **caractérisé en ce que** la dernière membrane (6) est imperméable à l'eau liquide et/ou aux lubrifiants, tels que de l'huile de lubrification ou de la graisse de lubrification, et en particulier **en ce que** la dernière membrane (6) est imperméable à la vapeur d'eau.

10. Dispositif selon au moins une des revendications précédentes, **caractérisé en ce que** le mécanisme de transmission contient du lubrifiant.

11. Dispositif selon au moins une des revendications précédentes, **caractérisé en ce que** la première membrane (4, 50) est fabriquée en une matière plastique élastique, en particulier en caoutchouc, en polyéthylène ou des matériaux similaires.

12. Dispositif selon au moins une des revendications précédentes, **caractérisé en ce que** le dispositif est un dispositif d'entraînement, comprenant au moins un mécanisme de transmission, un moteur électrique entraînant ce mécanisme et un montage électronique, tel qu'un convertisseur de fréquence ou analogue, alimentant ce montage.

13. Dispositif selon au moins une des revendications 4 à 12, **caractérisé en ce que** la pièce (51) en matière plastique moulée par injection présente une saillie (52), en particulier une saillie (52) oblongue ou tubulaire, qui est prévue dans un évidement d'une première partie de boîtier (60), en particulier d'une partie de boîtier (60) séparant la région (1) du mécanisme de transmission et la région (2) du moteur,
sachant notamment que la saillie (52) présente un filetage sur lequel une pièce filetée, en particulier un écrou, un boulon ou analogue, peut être vissée afin d'assembler la pièce (51) en matière plastique moulée par injection à la première partie de boîtier (60), sachant notamment qu'un élément d'étanchéité, en particulier un anneau torique d'étanchéité, est prévu entre la pièce filetée et/ou la pièce (51) en matière plastique moulée par injection, en particulier afin d'obtenir un assemblage étanche de la pièce (51) en matière plastique moulée par injection avec la première partie de boîtier (60).
